# EUROPÄISCHE PATENTANMELDUNG

(11) **EP 0 557 815 A1**
(43) Veröffentlichungstag der Anmeldung: **01.09.1993**
(21) Anmeldenummer: 93102209.9
(22) Anmeldetag: 12.02.1993
(51) Int. Cl.: B27M 3/12, B23Q 33/00, B23Q 35/44

(54) **Vorrichtung zur Anpassung von Nuten in Treppenwangen an Treppenstufen**

(30) Priorität: 25.02.1992 DE 4205626
(71) Anmelder: Müller, Hellmut, Dipl.-Ing. (FH), D-65604 Elz (DE)
(72) Erfinder: Müller, Hellmut, Dipl.-Ing. (FH), D-65604 Elz (DE)
(74) Vertreter: Weber, Dieter, Dr.

(57) **Zusammenfassung**

Eine Vorrichtung zur Anpassung in Treppenwangen eingefräster Nuten an die von ihnen aufzunehmende Treppenstufe, ist gekennzeichnet durch zwei Winkelteile (1, 2) mit zwei im rechten Winkel zueinander stehenden Schenkeln (1a, 1b; 2a, 2b), wobei die Winkelteile (1, 2) so miteinander verbunden sind, daß sie einen rechteckigen Hohlraum (9) zwischen sich einschließen und in zwei zueinander senkrechten Richtungen derart gegeneinander verschiebbar und in jeder Stellung stufenlos aneinander befestigbar sind, daß der von ihnen eingeschlossene rechteckige Hohlraum (9) in Breite und Länge veränderbar ist.

## Beschreibung

Bei der Herstellung und Montage von Holztreppen ist es üblich, in den beiderseitigen Wangen der Treppe Nuten einzufräsen, in die die Treppenstufen mit ihren seitlichen Kanten eingesetzt werden. Aus Gründen der Stabilität der Treppe und aus optischen Gründen ist es wichtig, daß diese in die Treppenwangen eingefrästen Nuten den vorgefertigten Treppenstufen genau entsprechen. Wenn die Nuten in die Treppenwangen an der Montagestelle eingefräst werden, ist das Einpassen zeit- und arbeitsaufwendig. Da die Treppenstufen untereinander nicht völlig identische Abmessungen haben, muß jede Stufe einzeln eingestellt und eingepaßt werden. Auch bei im Herstellungsbetrieb bereits eingefrästen Nuten ist der Arbeitsaufwand an der Montagestelle relativ groß, da jede Nut dort nachgearbeitet werden muß, um genau zu der aufzunehmenden Treppenstufe zu passen.

Die der Erfindung zugrundeliegende Aufgabe bestand nun darin, das Einpassen von Treppenstufen in die hierfür vorgesehenen Nuten in den Treppenwangen zu erleichtern und dabei den Arbeitsaufwand zu reduzieren. Diese Aufgabe wird erfindungsgemäß mit einer Vorrichtung zur Anpassung in Treppenwangen eingefräster Nuten an die von ihnen aufzunehmende Treppenstufe gelöst.

Erfindungsgemäß ist diese Vorrichtung durch zwei Winkelteile mit zwei im rechten Winkel zueinanderstehenden Schenkeln gekennzeichnet, wobei die Winkelteile so miteinander verbunden sind, daß sie einen rechteckigen Hohlraum zwischen sich einschließen und in zwei zueinander senkrechten Richtungen derart gegeneinander verschieblich und in jeder Stellung stufenlos aneinander befestigbar sind, daß der von ihnen eingeschlossene rechteckige Hohlraum in Breite und länge veränderbar ist.

Bei der Verwendung dieser Vorrichtung wird das in die herzustellende Nut einzuschiebende Ende einer Treppenstufe in den rechteckigen Hohlraum der Vorrichtung eingeschoben, sodann werden die beiden Winkelteile derart gegeneinander verschoben, daß die vier Schenkel selbst oder vorzugsweise über Abstandshalter an der Treppenstufe anliegen, worauf die beiden Winkelteile in dieser Stellung aneinander befestigt werden. Nunmehr wird die Treppenstufe aus dem rechteckigen Hohlraum herausgezogen, die Vorrichtung an die Treppenwange angelegt und mit Hilfe eines Fräsgerätes eine Nut entsprechend der eingestellten Größe des rechteckigen Hohlraumes in die Treppenwange eingefräst. Diese Methode gewährleistet, daß die eingefräste Nut exakt der aufzunehmenden Treppenstufe entspricht.

Da man mit einem Fräsgerät üblicherweise nicht unmittelbar bis an eine Kante heran ausfräsen kann, da übliche Fräsgeräte Anlaufringe haben, ist es für solche Fräsgeräte erforderlich und damit bevorzugt, an den Winkelteilen innerhalb des von ihnen eingeschlossenen rechteckigen Hohlraumes Abstandshalter vorzusehen, die der Dicke der Anlaufringe des Fräsgerätes entsprechen. In diesem Fall ist also der von den Winkelteilen eingeschlossene, entsprechend den obigen Ausführungen eingestellte rechteckige Hohlraum um die Dicke des Anlaufringes des Fräsgerätes breiter und länger als die Treppenstufe, wobei in der Vorrichtung der Abstand zwischen der Treppenstufe und den Schenkeln der Winkelteile durch die Abstandshalter überbrückt wird. Diese Abstandshalter werden entweder lose eingelegt oder sind von den Schenkeln der Winkelteile entfernbar, da sie nach der Einstellung der Hohlraumgröße und vor dem Einfräsen der Nut in die Treppenwange aus dem Hohlraum herausgenommen werden. Wenn nun mit Hilfe des Fräsgerätes entlang den Kanten des Hohlraumes ausgefräst wird, entsteht wegen der Dicke des Anlaufringes des Fräsgerates eine Nut, die exakt dem Treppenstufenende entspricht.

Die Einrichtungen zur Verschiebung der Winkelteile gegeneinander und der Fixierung der Winkelteile aneinander kann unterschiedlich ausgebildetsein. Eine bevorzugte Ausbildung besteht darin, daß jeder der Schenkel beider Winkelteile einen Längsschlitz aufweist und die beiden Winkelteile so miteinander verbunden sind, daß die Schlitze des einen Winkelteils die des anderen Winkelteils senkrecht zueinander überlagern und daß jeweils zwei dieser sich überlagernden Schlitze von einer Stellschraube durchdrungen sind, mit Hilfe derer die Lage der Winkelteile zueinander fixierbar ist. Diese Stellschraube ist zweckmäßig eine Flügelschraube, die so bemessen ist, daß sie in den beiden zueinander senkrechten, einander überlagernden Schlitzen verschoben werden kann. In der gewünschten Einstellage wird dann die Flügelmutter soweit angezogen, daß die beiden Winkelteile fest aufeinandergepreßt werden und sich nicht mehr gegeneinander verschieben lassen.

Da die Treppenstufen gewöhnlich brettförmig sind, d.h. im Querschnitt eine größere Breite als Höhe haben, ist es zur leichteren Handhabung der Vorrichtung zweckmäßig, daß jedes der Winkelteile einen längeren und einen kürzeren Schenkel hat. Zur Erleichterung des Fräsens ist es außerdem zweckmäßig, daß die Dicke der Gesamtvorrichtung rings um den rechteckigen Hohlraum im wesentlichen gleich ist. Hierzu besitzen die Schenkel der Winkelteile in den beim Verschieben einander überlagernden Bereichen nur die halbe Dicke der übrigen Bereiche, welche letztere nicht von dem jeweils anderen Winkelteil überlagert werden.

Mit Hilfe der Vorrichtung nach der Erfindung wird das Anpassen der Fräsnut in einer Treppenwange an die aufzunehmende Treppenstufe wesentlich erleichtert, da mit einem Fräsvorgang sofort die exakte Nutabmessung erzielt wird und ein Nacharbeiten nicht erforderlich ist. Da jede einzelne Stufe einer Treppe einzeln eingepaßt werden muß, ergibt sich bei Verwendung der erfindungsgemäßen Vorrichtung für die gesamte Treppe eine sehr erhebliche Arbeits- und Zeitersparnis.

Damit die erfindungsgemäße Vorrichtung auch für Treppen mit Krümmlingen bzw. Rundbogentreppen brauchbar ist, ist es bevorzugt, daß die Schenkel der Winkelteile biegbar sind und sich so den Krümmlingen oder gekrümmten Treppenwangen anpassen können.

In der Zeichnung ist die erfindungsgemäße Vorrichtung weiter erläutert. In dieser bedeutet
- Figur 1: eine Draufsicht auf eine Ausführungsform der erfindungsgemäßen Vorrichtung mit einer in den rechteckigen Hohlraum eingelegten Treppenstufe und
- Figur 2: eine Seitenansicht der in Figur 1 dargestellten Vorrichtung.

Die in der Zeichnung dargestellte Vorrichtung besteht aus zwei Winkelteilen 1 und 2, die jeweils einen längeren Schenkel 1a bzw. 2a und einen kürzeren Schenkel 1b bzw. 2b haben. Jeder dieser Schenkel besitzt ein durchgehendes Langloch in Längsrichtung des jeweiligen Schenkels. Die Schenkel 1a und 2a besitzen die Langlöcher 3 und 4, die kürzeren Schenkel 1b und 2b die Langlöcher 5 und 6. Mit Hilfe von Flügelschrauben 7 und 8, die in den Langlöchern gleiten können, sind die beiden Winkelteile 1 und 2 aneinander fixierbar. Die Langlöcher 3 und 6 einerseits sowie 4 und 5 andererseits liegen senkrecht zueinander und übereinander.

Die Winkelteile 1 und 2 schließen einen rechteckigen Hohlraum 9 ein, der das eingeschobene Treppenstufenende 10 umgreift. Abstandshalter 11, die in dem Hohlraum 9 zwischen den Schenkeln der Winkelteile 1 und 2 und dem Treppenstufenende 10 angeordnet sind, kompensieren die Dicke des Anlaufringes des zu verwendenden Fräsgerätes. Die Abstandshalter 11 können lose eingelegt oder lösbar an den Winkelteilen 1 und 2 befestigt sein.

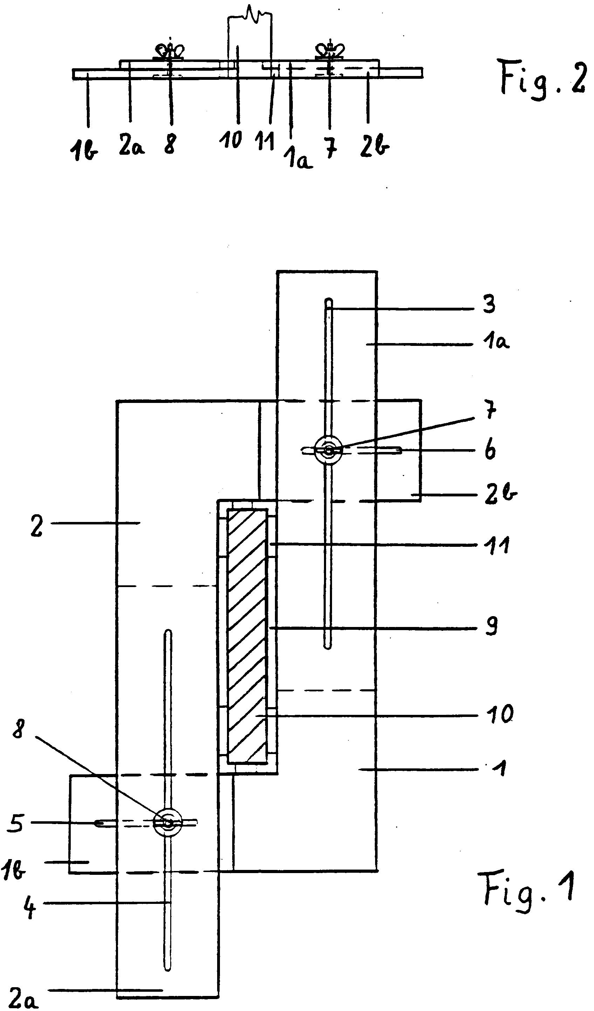

Wie insbesondere aus Figur 2 ersichtlich ist, haben die einander überlagernden Bereiche der beiden Winkelteile, also die Bereiche mit den Schlitzen 3, 4, 5 und 6 die halbe Dicke der übrigen Bereiche der Winkelteile, so daß die Vorrichtung den Hohlraum 9 ringsum mit gleicher Dicke umgibt.

### Bezugszeichenliste

- 1,2: Winkelteile
- 1a, 2a: Schenkel
- 1b, 2b: Schenkel
- 3, 4, 5, 6: Langlöcher, Schlitze
- 7, 8: Flügelschrauben
- 9: Hohlraum
- 10: Treppenstufenende
- 11: Abstandshalter

## Patentansprüche

1. Vorrichtung zur Anpassung in Treppenwangen eingefräster Nuten an die von ihnen aufzunehmende Treppenstufe, gekennzeichnet durch zwei Winkelteile (1, 2) mit zwei im rechten Winkel zueinander stehenden Schenkeln (1a, 1b; 2a, 2b), wobei die Winkelteile (1, 2) so miteinander verbunden sind, daß sie einen rechteckigen Hohlraum (9) zwischen sich einschließen und in zwei zueinander senkrechten Richtungen derart gegeneinander verschiebbar und in jeder Stellung stufenlos aneinander befestigbar sind, daß der von ihnen eingeschlossene rechteckige Hohlraum (9) in Breite und Länge veränderbar ist.

2. Vorrichtung nach Anspruch 1, dadurch gekennzeichnet, daß jeder der Schenkel (1a, 1b; 2a, 2b) beider Winkelteile (1, 2) einen Längsschlitz (3, 4, 5, 6) aufweist und die beiden Winkelteile (1, 2) so miteinander verbunden sind, daß die Längsschlitze (3, 5) des einen Winkelteils (1) die (4, 6) des anderen Winkelteils (2) senkrecht zueinander überlagern und jeweils zwei sich überlagernde Längsschlitze (4, 5; 3, 6) von einer Stellschraube (7, 8) durchdrungen sind, mit Hilfe derer die Lage der Winkelteile zueinander fixierbar ist.

3. Vorrichtung nach Anspruch 1 oder 2, dadurch gekennzeichnet, daß jedes Winkelteil (1, 2) einen längeren (1a, 2a) und einen kürzeren (1b, 2b) Schenkel hat.

4. Vorrichtung nach einem der Ansprüche 1 bis 3, dadurch gekennzeichnet, daß die Winkelteile (1, 2) innerhalb des rechteckigen Hohlraumes (9) entfernbare Abstandshalter (11) besitzen.

5. Vorrichtung nach einem der Ansprüche 1 bis 4, dadurch gekennzeichnet, daß die Stellschrauben (7,8) Flügelschrauben sind.

6. Vorrichtung nach einem der Ansprüche 1 bis 5, dadurch gekennzeichnet, daß die Bereiche der Winkelteile (1, 2), die die Längsschlitze (3, 4, 5, 6) aufweisen, etwa halb so dick wie die übrigen Bereiche der Winkelteile sind.

7. Vorrichtung nach einem der Ansprüche 1 bis 6, dadurch gekennzeichnet, daß die Schenkel (1a, 1b; 2a, 2b) der Winkelteile (1, 2) biegbar sind.

8. Verwendung einer Vorrichtung nach einem der Ansprüche 1 bis 7 zum Einfräsen von Nuten in Treppenwangen zur Aufnahme von Treppenstufen.
